# EUROPÄISCHE PATENTSCHRIFT

(11) **EP 0 759 532 B1**
(45) Veröffentlichungstag und Bekanntmachung des Hinweises auf die Patenterteilung: **29.11.2000**
(21) Anmeldenummer: 96112503.6
(22) Anmeldetag: 02.08.1996
(51) Int. Cl.: F41F 3/04, B64D 1/06

(54) **Einrichtung zur Aufnahme und Halterung von Flugkörpern in einem Startgerät**
Device for receiving and holding missiles in a launching device
Dispositif pour recevoir et maintenir des missiles dans un dispositif de largage

(30) Priorität: 19.08.1995 DE 19530563
(43) Veröffentlichungstag der Anmeldung: 26.02.1997
(73) Patentinhaber: Bodenseewerk Gerätetechnik GmbH, 88662 Überlingen (DE)
(72) Erfinder: Giesenberg, Peter, 88682 Salem (DE); Stadler, Rolf, 88662 Überlingen (DE); Lang, Wilfried, 65077 Koblenz (DE)
(74) Vertreter: Hofmann, Gerhard, Dipl.-Ing. Patentassessor

(56) Entgegenhaltungen:
- EP-A- 0 340 400
- US-A- 3 854 681

## Beschreibung

Die Erfindung betrifft eine Einrichtung zur Aufnahme und Halterung von Flugkörpern in einem Startgerät nach dem Oberbegriff des Schutzanspruches 1.

Mit einer mechanischen Einrichtung der vorstehend genannten Art werden Flugkörper in einer Führungsschiene eines Startgerätes fixiert und gegen unbeabsichtigtes Verschieben bzw. Herausrutschen des Flugkörpers aus der Führungsschiene entgegen der Flugkörper-Flugrichtung gesichert. Die aus der Praxis bekannten Flugkörper bzw. Lenkflugkörper weisen zwei oder auch drei T-förmige Gleitschuhe auf, mit denen sie in der Führungsschiene des Startgerätes geführt werden. Bei der Beladung wird der Flugkörper in die Führungsschiene eingeführt und soweit in Flugrichtung nach vorne geschoben, bis eine Verriegelungsmechanik den vorderen Gleitschuh formschlüssig umfaßt. Zwischen der Führungsschiene des Startgerätes und dem Flugkörper befindet sich ein Spiel von mehreren Millimetern, um eine leichtgängige Beladung zu ermöglichen.

In der vorgeschilderten Beladeposition wird der Flugkörper spielfrei in die Führungsschienen gepreßt, was durch zwei scherenartig gelagerte, keilförmige Bleche unter Federkraft erfolgt. Durch die punktförmige Berührung zwischen den Blechen und dem Gleitschuh kommt es bei den unvermeidlichen Flugzeugvibrationen zu Druckstellen und erheblichem Abrieb an den Gleitschuhen, so daß die Funktionssicherheit der mechanischen Halterung bereits nach wenigen Flugstunden nicht mehr gegeben ist. Da sich an einigen Trägerflugzeugen sogenannte Doppel-Beladestationen befinden, bei denen die Startgeräte nach unten um etwa 30° zur Vertikalen schräg nach links und nach rechts angeordnet sind, werden die scherenartig gelagerten Bleche ungleichmäßig belastet, wodurch die Funktionssicherheit weiter reduziert wird.

Durch die US 3,854,681 ist bereits eine Haltevorrichtung für Traglasten gemäß dem Oberbegriff des Anspruchs 1 bekannt, die an Flugzeuge angehängt ist. Bei dieser bekannten Haltevorrichtung wirkt eine progressive Bahnkurve eines Exzenters eines Reibrichtgehemmes gegen die Traglast und hält diese dadurch in Position. Damit die Nocke bzw. der Exzenter sich nicht entgegen der Wirkrichtung der Bahnkurve bewegt, steht der Exzenter und der Wirkung einer Druckfeder, die über eine Druckstange mit Achse am Exzenter angreift. Erst durch ein gewolltes Lösen von sogenannten Haken, die ein an der Traglast befestigtes Brückenteil halten, dreht der Exzenter aus seiner Werkposition.

Ausgehend von dem vorgenannten Stand der Technik ist es Aufgabe der Erfindung, eine Einrichtung zur Aufnahme und Halterung von Flugkörpern in einem Startgerät zu schaffen, welche mit technisch einfachen Mitteln die sichere Halterung des Flugkörpers im Startgerät unter allen auftretenden Flugbedingungen sicher gewährleistet.

Erfindungsgemäß wird diese Aufgabe durch die Merkmale des Anspruches 1 gelöst. Erfinderische Ausgestaltungen und Weiterbildungen dieser Lösung sind in den Unteransprüchen 2 und 3 beschrieben.

Nach der erfinderischen Lösung wird die sichere Halterung des Flugkörpers auf bzw. in dem Startgerät dadurch gewährleistet, daß ein Reibrichtgehemme besonderer Bauart eine relativ große Fläche zwischen dem Flugkörper und dem Startgerät in Form einer Kraftpaarung einnimmt. Diese Kraftpaarung, bei der ein Exzenter mit einer logarithmischen Spiral-Wirkfläche gegen eine Flugkörperfläche wirkt und sich dabei auf einer Oberfläche des Startgerätes abstützt, verbleibt der aufgenommene Flugkörper auch bei Flugzeugvibrationen in der eingenommenen Halteposition und verhindert durch die relativ große Flächenpressung ein unbeabsichtigtes Lösen. Dazu ist das eingesetzte Reibrichtgehemme robust ausgeführt, so daß Beschädigungen, welche die Funktionssicherheit beeinträchtigen könnten, weitgehend ausgeschlossen sind.

In der Zeichnung ist ein Beispiel der Erfindung dargestellt. Darin zeigen:

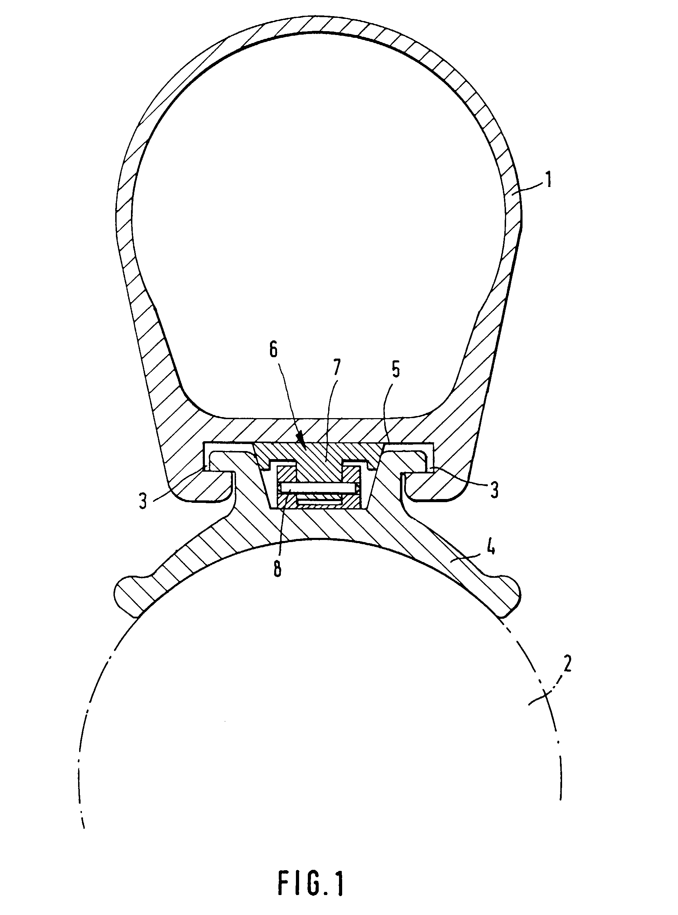

- Figur 1: ein Startgerät mit einer Halteeinrichtung nach dem geschilderten Stand der Technik im Schnitt;
- Figur 2: die Einrichtung zur Aufnahme und Halterung von Flugkörpern in einem Startgerät gemäß der Erfindung im Schnitt;
- Figur 3: die Einrichtung nach Figur 2 gemäß der Linie III-III in Figur 2;

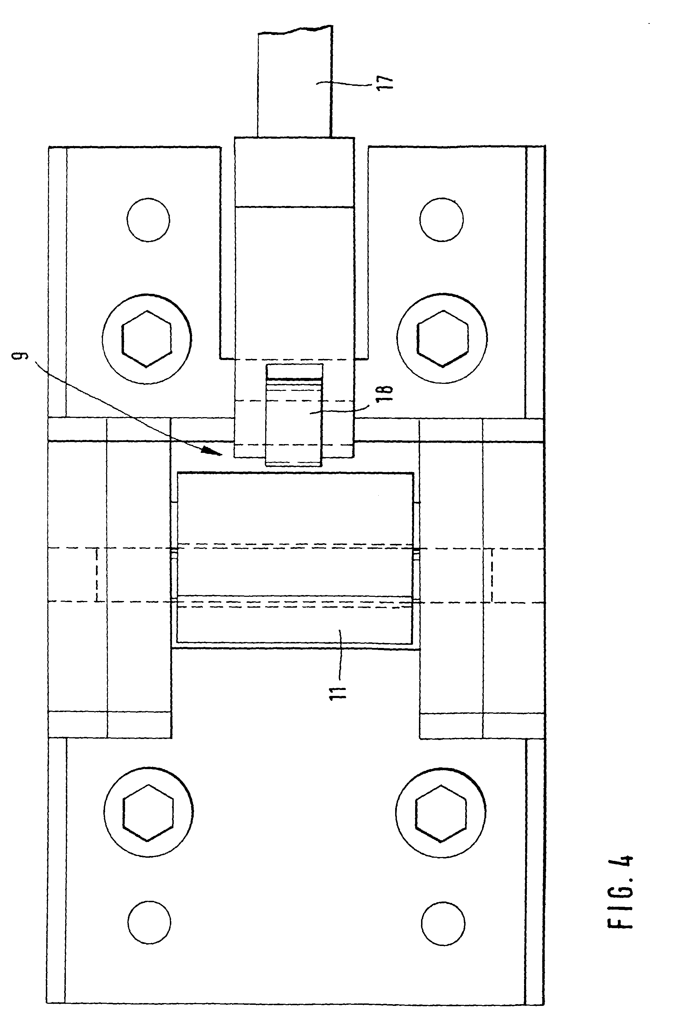

- Figur 4: eine Draufsicht auf die Einrichtung gemäß dem Pfeil IV in Figur 3;
- Figur 5: die Einrichtung nach Figur 2 in anderer Ausführung im Schnitt.

Das Startgerät 1 für einen Flugkörper 2 besitzt zwei einander gegenüberliegende Führungsschienen 3, in die der Flugkörper 2 mittels eines Hängers 4 gleitend eingeschoben ist. Um den Flugkörper 2 in einer vorbestimmten Position entlang der Führungsschienen 3 des Startgerätes 1 zu positionieren, ist in die Unterfläche 5 zwischen den Führungsschienen 3 eine Einrichtung 6 zur Aufnahme und Halterung des Flugkörpers 2 angeordnet. Diese Einrichtung weist nach dem eingangs geschilderten Stand der Technik zwei scherenartig auf Bolzen 8 gelagerte, keilförmige Bleche 7 auf. Durch diese Bleche wird am Hänger 4 nur eine punktförmige Hemmung erreicht, was bei Flugzeugvibrationen zu Druckstellen und erheblichem Abrieb und schließlich zum ungewollten Lösen des Flugkörpers 2 aus dem Startgerät 1 führt.

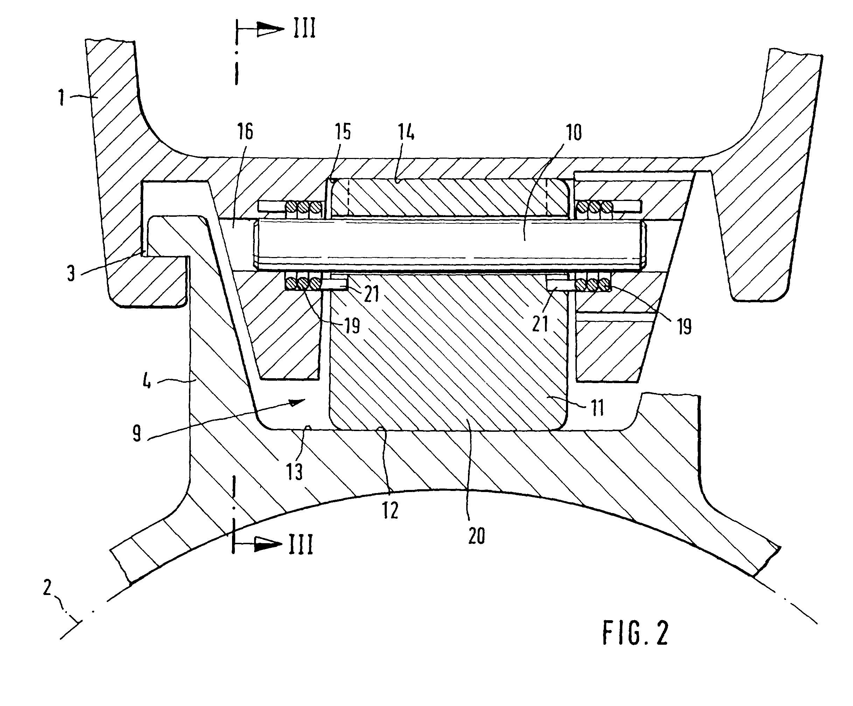

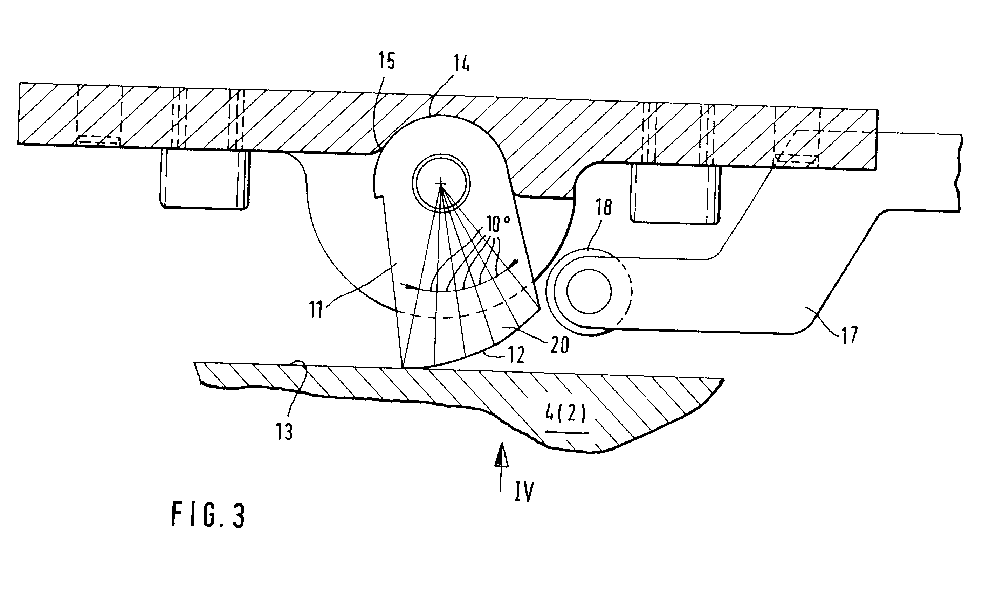

Um hier eine entscheidende technische Verbesserung zu erzielen, ist gemäß der Erfindung in Figur 2 ein besonders gestaltetes Reibrichtgehemme 9 zur Aufnahme und Halterung von Flugkörpern 2 dargestellt. Der Flugkörper 2 wird mittels des Hängers 4 wieder in die beidseitigen Führungsschienen 3 des Startgerätes 1 eingeschoben. Das Reibrichtgehemme 9 hält den Flugkörper 2 in einer vorbestimmten Position am Startgerät 1 sicher fest. Ein um einen Bolzen 10 drehbar gelagerter Exzenter 11 liegt mit seiner Wirkfläche 12 hemmend auf einer zugeordneten Oberfläche 13 des Hängers 4 an. Die Wirkfläche 12 des Exzenters 11 ist in Form einer logarithmischen Spirale ausgebildet, wie dies in Figur 3 verdeutlicht ist. Mit der dieser Wirkfläche 12 abgewandten kugeligen Oberfläche 14 stützt sich der Exzenter auf der korrespondierend geformten Oberfläche 15 des Startgerätes 1 ab. Diese abstützende Bauweise bewirkt, daß auf den Bolzen 10 keine die Hemmung bewirkenden Kräfte einwirken, so daß dieser Bolzen 10 in der Bohrung 16 einen relativ kleinen Querschnitt aufweisen kann. Die in Kugelform ausgebildete Oberfläche 14 des Exzenters 11 führt zur vorteilhaften Linienberührung zwischen der Wirkfläche 12 des Reibdaumens 20 und der zugewandten Oberfläche 13 des Hängers 4. Durch die Kugelform der Oberfläche 14 werden Schrägstellungen des Exzenters ausgeglichen und eine sichere Funktion des Reibrichtgehemmes 9 in allen auftretenden Flugbedingungen gewährleistet. Der Lagerbolzen 10 besitzt einen relativ kleinen Druchmesser, weil er keine Kräfte und Momente aufzunehmen hat, sondern lediglich der Positionierung dient. Die Kräfte werden grundsätzlich über den Exzenter 11 in seinen Abstütz- bzw. Anlegepositionen übertragen. Ferner ist eine Passung zwischen dem Lagerbolzen 10 und der entsprechenden Aufnahmebohrung im Exzenter 11 nicht erforderlich.

In Figur 3 ist die Wirkfläche 12 des Reibdaumens 20 in logarithmischer Spirale in ihrer hemmenden Anlage auf der Gegenfläche 13 des Hängers 4 deutlich erkennbar. In diese hemmende Position wird der Exzenter 11 durch eine Schubstange 17 gebracht, die im Prinzip tangential mit ihrer vorderen abgerundeten Stirnfläche auf den Exzenter 11 drückt. Anstelle der einteiligen Abrundung kann die vordere Stirnfläche der Schubstange 17 auch mit einer Rolle oder einem Rollrad 18 versehen sein. Die Schubstange 17 ist in der vorderen Position bei eintretender Hemmung feststellbar. Der Exzenter 11 ist entgegen der durch die Schubstange 17 bewirkten Bewegungsrichtung durch Schraubenfedern 19 selbsttätig rückstellbar, deren eines Ende jeweils in eine Seitenausnehmung 21 in den Exzenter 11 eingreift, während das andere Schraubenende der um die Enden des Lagerbolzens 10 gewickelten Schraubenfeder 19 mit dem feststehenden Startgerät 1 verbunden ist.

Eine bevorzugte Ausbildung der spiralförmigen Wirkfläche 12 sieht vor, daß in Winkelschritten von jeweils 10° eine gleichförmige Steigerung des Radius vorgenommen ist. Die der Wirkfläche 12 abgewandte Abstützfläche 14 des Exzenters 11 ist kugelförmig gestaltet und liegt an der korrespondierend ausgebildeten Fläche am Startgerät 1 an. Die an sich auch mögliche kreisförmige Gestaltung der Abstützfläche 14 bewirkt in verschlechteter Ausführung eine nur zufallsbedingte linienförmige Berührung zwischen der Wirkfläche 12 des Reibdaumens 20 und der Oberfläche 13 des Hängers 4.

Im Regelfall ist die spiralförmige Wirkfläche 12 fein bearbeitet. Sie kann zur Erhöhung des Reibmomentes auch zusätzlich aufgerauht sein oder einen speziellen Überzug zur Steuerung der Reibkräfte erhalten. Alternativ dazu können auch besondere Werkstoffe ausgewählt werden, die eine optimale Hemmung zwischen der Wirkfläche 12 des Exzenters 11 und der Oberfläche 13 des Hängers 4 bzw. des Flugkörpers 2 gewährleisten.

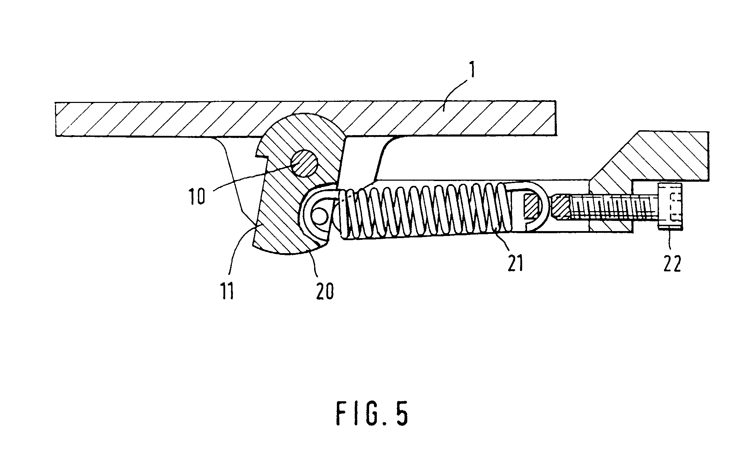

In Figur 5 ist alternativ zu Figur 3 der Exzenter 11 mit einer von einer Stellschraube 22 beaufschlagten Zugfeder 21 gezeigt. Diese Anordnung bewirkt eine selbsttätige Rückstellung des Exzenters 11.

## Patentansprüche

1. Einrichtung zur Aufnahme und Halterung von Flugkörpern (2) in einem Startgerät (1), welches mit zwei seitlichen Führungsschienen (3) versehen ist, in die der Flugkörper (2) mit Spiel einschiebbar und in vorbestimmter Position mechanisch durch ein Reibrichtgehemme (9) feststellbar ist, das einen Exzenter (11) aufweist, der auf einem Bolzen (10) am/im Startgerät gelagert ist,
dadurch gekennzeichnet,
daß das Reibrichtgehemme (9) im Mittelbereich zwischen den Führungsschienen (3) eingesetzt ist und unter der Wirkung einer Feststellkraft steht, daß die Wirkfläche (12) des Exzenters (11) in Form einer logarithmischen Spirale ausgebildet ist, die sich mit der abgewandten, bogenförmig, insbesondere kugelförmig gestalteten Oberfläche (14) auf einer korrespondierend geformten Fläche am Startgerät (1) abstützt, und daß die Feststellkraft für den Exzenter (11) des Reibrichtgehemmes (9) durch einen axial bewegbaren Feststellhebel (17) erzeugt wird, der zur Erzielung einer Hemmung gegen den Exzenter (11) tangential ansteht und die radial äußere Fläche der spiralförmigen Wirkfläche (12) gegen die zugewandte Fläche des Flugkörpers (2) gedrückt hält.

2. Einrichtung nach Anspruch 1,
dadurch gekennzeichnet,
daß die spiralförmige Wirkfläche (12) und/oder die abgewandte Abstützfläche (Oberfläche 14) des Exzenters (11) eine aufgerauhte Oberfläche aufweist/aufweisen.

3. Einrichtung nach Anspruch 1 oder 2,
dadurch gekennzeichnet,
daß der Exzenter (11) des Reibrichtgehemmes (9) zumindest an einer Seitenfläche durch eine Schraubenfeder (19) beaufschlagt ist, die sich am Startgerät (1) abstützt und der Hemmrichtung des Exzenters (11) entgegenwirkt.

## Claims

1. Device for accommodating and holding missiles (2) in a launcher (1), which is provided with two lateral guide rails (3), in which the missile (2) can be inserted with some play and can be mechanically fixed in a predetermined position by a friction wedging device (9), which has a cam (11), which is mounted on a bolt (10) on/in the launcher,
characterized in that
the friction wedging device (9) is inserted in the central region between the guide rails (3) and is under the influence of an immobilizing force;
in that the working or effective surface (12) of the cam (11) takes the form of a logarithmic spiral, which is supported at the opposite, curved and in particular spherically formed surface (14) on a correspondingly formed surface on the launcher (1); and
in that the immobilizing force for the cam (11) of the friction wedging device (9) is produced by an axially movable immobilizing lever (17), which extends tangentially pressing against the cam (11) to achieve a wedging action and holds the radially external surface of the spiral-shaped working surface (12) pressed against the facing surface of the missile (2).

2. Device according to Claim 1,
characterized in that
the spiral-shaped working surface (12) and/or the opposite supporting surface (surface 14) of the cam (11) has/have a roughened surface.

3. Device according to Claim 1 or 2,
characterized in that
the cam (11) of the friction wedging device (9) is acted upon at least on one lateral face by a spiral spring (19), which is supported on the launcher (1) and acts counter to the wedging direction of the cam (11).

## Revendications

1. Système de réception et de fixation de missiles (2) dans un lanceur (1) pourvu de deux rails de guidage (3) latéraux, dans lequel le missile (2) peut être introduit avec jeu et peut être fixé mécaniquement, dans des positions prédéterminées, par un dispositif de blocage du pointage par friction (9), qui comporte un excentrique (11), lequel est monté sur un axe (10) sur/dans le lanceur, caractérisé en ce que le dispositif de blocage (9) est inséré dans la zone centrale entre les rails de guidage (3) et est soumis à l'action d'une force de blocage, en ce que la surface active (12) de l'excentrique (11) est réalisée sous la forme d'une spirale logarithmique qui prend appui, par la surface (14) tournée à l'opposé, en forme d'arc, notamment sphérique, sur une surface de forme correspondante du lanceur (1), et en ce que la force de blocage de l'excentrique (11) du dispositif de blocage (9) est produite par un levier de blocage (17) déplaçable axialement, qui est tangentiel par rapport à l'excentrique (11), pour produire un blocage, et qui maintient la surface radialement extérieure de la surface active (12) en forme de spirale pressée contre la surface tournée vers ce levier du missile (2).

2. Système selon la revendication 1, caractérisé en ce que la surface active (12) en forme de spirale et/ou la surface d'appui (surface 14) tournée à l'opposé de l'excentrique (11) présente/présentent une surface rendue rugueuse.

3. Système selon la revendication 1 ou 2, caractérisé en ce que l'excentrique (11) du dispositif de blocage (9) est sollicité, au moins sur une face latérale, par un ressort hélicoïdal (19) qui prend appui contre le lanceur (1) et qui agit dans le sens contraire au sens de blocage de l'excentrique (11).
